Europäisches Patentamt

European Patent Office

Office européen des brevets

(11) Numéro de publication : **0 495 697 A1**

# (12) DEMANDE DE BREVET EUROPEEN

(21) Numéro de dépôt : **92400063.1**

(22) Date de dépôt : **10.01.92**

(51) Int. Cl.$^5$ : **G06K 9/52**

(30) Priorité : **15.01.91 FR 9100365**

(43) Date de publication de la demande :
**22.07.92 Bulletin 92/30**

(84) Etats contractants désignés :
**DE FR GB**

(71) Demandeur : **THOMSON-CSF**
**51, Esplanade du Général de Gaulle**
**F-92800 Puteaux (FR)**

(72) Inventeur : **Schmitt, Michel**
**THOMSON-CSF, SCPI, Cédex 67**
**F-92045 Paris la Défense (FR)**
Inventeur : **Vallet, François**
**THOMSON-CSF, SCPI, Cédex 67**
**F-92045 Paris la Défense (FR)**
Inventeur : **Mattioli, Juliette**
**THOMSON-CSF, SCPI, Cédex 67**
**F-92045 Paris la Défense (FR)**

(74) Mandataire : **Guérin, Michel et al**
**THOMSON-CSF SCPI**
**F-92045 PARIS LA DEFENSE CEDEX 67 (FR)**

(54) **Procédé de reconnaissance d'une forme d'image.**

(57) Le procédé comporte différentes étapes telles que :
— faire correspondre à la forme d'image, une surface (SI)
— superposer cette surface à une trame de points images (PI)
— balayer la surface avec des éléments géométriques de différentes formes et incorporant des points images
— déterminer les différentes dimensions des surfaces balayées
— faire correspondre dans un système classifieur, du type classifieur neuronal, une identification de forme d'image à l'ensemble des dimensions de surfaces balayées.
APPLICATION :
— traitement optique de documents
— imagerie médicale
— robotique

FIG.1d

EP 0 495 697 A1

L'invention concerne un procédé de reconnaissance d'une forme d'image.

L'invention est applicable notamment à l'imagerie médicale robotique industrielle ou spatiale, et au traitement optique de documents.

Le domaine général est celui de l'analyse d'images, et plus particulièrement celui de la reconnaissance de formes. Il s'agit de détecter et d'identifier dans une image des formes correspondant à des objets qui appartiennent à un ensemble de classes défini à l'avance. La reconnaissance doit être invariante par certaines transformations (translation, rotation, échelle ... ).

Ce problème de reconnaissance de formes est très vaste, et de nombreuses approches existent, chacune ayant ses avantages et inconvénients. Le choix final de la méthode dépend de la nature des images à traiter et des contraintes particulières d'utilisation. Citons, parmi les plus connues, les approches suivantes :

1. Extraction d'attributs morphologiques (coins, courbures ... ) suivi d'une reconnaissance par "matching" (arbre de décision, analyse de données ... ) avec des modèles de référence. Les points faibles de cette méthode sont le bon choix des attributs d'une part, le temps d'exécution de la reconnaissance d'autre part.

2. Calcul de courbes granulométriques par ouverture, de laquelle on extrait des paramètres fournissant des informations symboliques sur les formes traitées, suivi d'un étage d'analyse de données (voir le document "Précis d'Analyse d'Images" de COSTER et CHERMANT, édition CNRS, 1985). Les problèmes essentiels sont la nécessité de formaliser un modèle clair (au niveau d'attributs symboliques) ainsi que la traduction des attributs symboliques en attributs numériques calculables sur la courbe. Les applications typiques se trouvent en cytologie.

3. Approximation polygonale des contours qui est comparée par "matching" à un dictionnaire de référence (voir le document "Hyper" : a new approach for the recognition and positionning of two-dimensional objects" de N. AYACHE et al, IEEE Pami, 8 (1), pages 44, 54, 1986. Un des avantages est celui de pouvoir traiter le cas de formes se recouvrant partiellement, mais la solution est très sensible aux variations par rapport aux références du dictionnaire.

4. Codage des contours qui donne une courbe caractéristique telle que $\rho(\theta)$ ou $\theta(s)$, dont on extrait des coefficients par analyse de Fourier, ceux-ci étant envoyés dans un étage de discrimination (analyse de données, réseau de neurones ... ), tel que cela est décrit dans le document "Shape Discrimination using Fourier descriptors" de E. PERSOON et al, IEEE Trans. Sys. Man. Cybernetic, SMC-7 : 170-179, 1977.

5. Application directe d'un réseau de neurones sur l'image grossièrement pré-traitée (centrage, débruitage .. ) : exemple typique de lecture de codes postaux tel que cela est décrit dans le document "Handwritten Digit with a Back-Propagation Network" de Y. Le Cunn et al publié dans "Neural Information Processing Systems", vol. 2 par Morgan Kaufmann 1990.

Ces deux dernières méthodes ont l'avantage d'être adaptatives et d'avoir une architecture implémentable sur des cartes rapides en phase de reconnaissance, mais demandent un grand temps d'apprentissage (configuration du réseau) et une base de données de grande taille. De plus l'architecture optimale du réseau est difficile à établir a priori, et demande une phase de développement importante.

La réalisation que nous proposons est une nouvelle méthode, alternative aux précédentes, et dont les avantages majeurs sont les suivants :

. Le type de formes traitées est très général,

. Le système est adaptatif : par rapport aux variabilités de formes à traiter d'une part, par rapport aux imperfections des équipements matériels formant la chaîne de traitement d'autre part,

. Les transformations géométriques par rapport auxquelles le système est robuste sont maîtrisées (par exemple translation, rotation ou facteur d'échelle), et ceci de manière indépendante de l'étage de reconnaissance.

L'invention concerne donc un procédé de reconnaissance d'une forme d'image caractérisé en ce qu'il comporte les différentes opérations suivantes :

a) faire correspondre à la forme d'image, une surface ayant un contour extérieur identique à celui de la forme ;

b) superposer la surface à une trame de points images ;

c) choisir un élément géométrique d'un premier type d'une forme déterminée incorporant un certain nombre de points de la trame et ayant une première dimension déterminée ;

d) construire l'enveloppe convexe faible de l'objet et mesurer sa dimensions ;

e) balayer la surface avec cet élément géométrique tout en restant à l'intérieur de la surface et mesurer la dimension de la surface balayée et diviser cette dimension par la dimension de l'enveloppe convexe de l'objet ;

f) réaliser les opérations précédentes avec des éléments géométriques d'un deuxième type, puis d'une troisième type et ainsi de suite ;

g) faire correspondre, dans un système neuronal à base d'apprentissage, à l'ensemble des mesures réalisées, une identification de forme d'image.

L'invention concerne également un procédé de reconnaissance d'une forme d'image caractérisé en ce qu'il comporte les différentes opérations suivantes :

a) faire correspondre à la forme d'image une surface ayant un contour extérieur identique à celui de la forme ;

b) superposer la surface à une trame de points images ;

c) choisir des éléments géométriques d'un premier type d'une forme déterminée incorporant un certain nombre de points de la trame et ayant une première dimension déterminée ;

d) construire l'enveloppe convexe faible de l'objet et mesurer sa dimension ;

e) balayer la surface avec l'élément géométrique tout en restant à l'extérieur de la surface, et mesurer la dimension de la surface non balayée et diviser cette dimension par la dimension de l'enveloppe convexe de l'objet ;

f) réaliser les opérations précédentes avec des éléments géométriques d'un deuxième type, puis d'un troisième type et ainsi de suite ;

g) faire correspondre dans un classifieur (neuronal ou classique) à base d'apprentissage, à l'ensemble des mesures réalisées, une identification de forme d'image.

L'invention concerne également un procédé de reconnaissance d'une forme d'image, caractérisée en ce qu'il comporte les différentes opérations suivantes :

a) faire correspondre à la forme d'image, une surface d'image ayant un contour extérieur identique à celui de la forme ;

b) inscrire la surface d'image dans un élément géométrique d'un premier type d'une forme et de dimensions déterminées ;

c) superposer l'élément géométrique du premier type à une trame de points images ;

d) choisir un élément géométrique d'un deuxième type incorporant un certain nombre de points de la trame et ayant des dimensions déterminées et balayer avec cet élément géométrique la surface de l'élément géométrique du premier type non couverte par la surface d'image, et mesurer la dimension de la surface balayée et diviser cette mesure par la dimension de l'élément géométrique du premier type ;

e) faire correspondre, dans un classifieur à base d'apprentissage, une forme d'image à l'ensemble des nombres d'éléments des deuxième type, troisième type, etc ....

Les différents objets et caractéristiques de l'invention apparaîtront plus clairement dans la description qui va suivre et dans les figures annexées qui représentent :

– les figures 1a à 1d, un exemple d'application du procédé de l'invention ;

– la figure 2, des courbes de fonctions spectrales de formes détectables ;

– la figure 3, un exemple de réseau neuronal ;

– les figures 4a et 4b, une variante du procédé de l'invention ;

– les figures 5 et 6, d'autres exemples de formes détectables par le procédé de l'invention ;

– la figure 7, une autre variante du procédé de l'invention ;

– la figure 8, montre une autre variante du procédé de l'invention ;

– la figure 9, un schéma synoptique du procédé de l'invention,

– les figures 10a à 10c, un procédé par transformation de l'image à analyser.

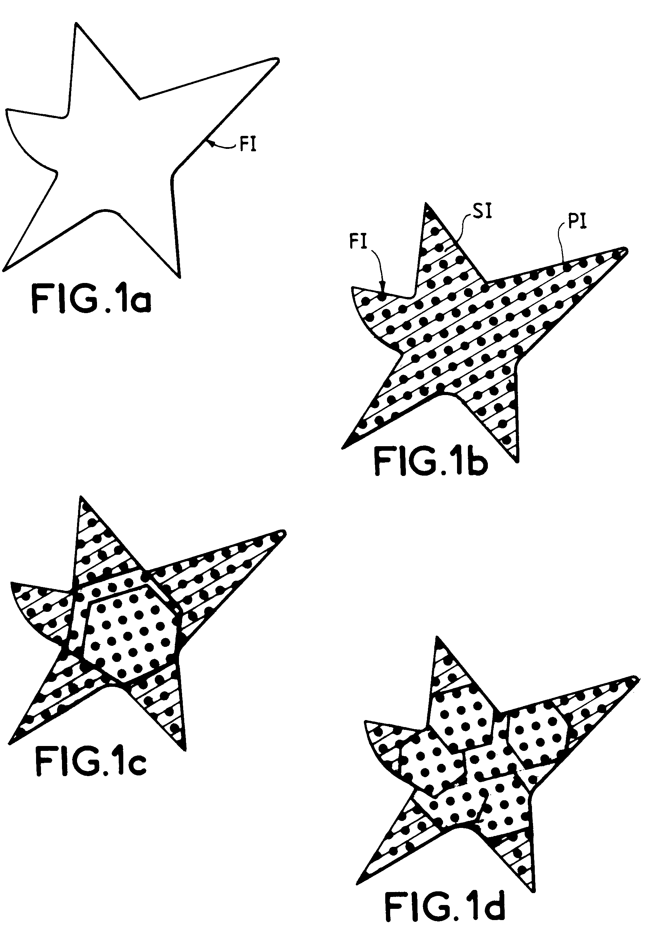

Les figures 1a à 1d représentent un exemple d'application du procédé de l'invention à une forme de type étoilée telle que représentée en figure 1a.

Selon le procédé de l'invention, la forme d'image FI de la figure 1a est transformée en une surface SI représentée en figure 1b. On superpose la surface à une trame de points images PI. Plus précisément, à chaque point contenu à l'intérieur du contour est affectée une information de position (coordonnées).

Ensuite selon un premier exemple du procédé de l'invention on balaye la surface SI à l'aide d'une figure géométrique telle qu'un cercle ou un polygone de dimension la plus grande possible et incorporant un certain nombre de points images..

Il est avéré qu'un polygone régulier tel qu'un hexagone convient parfaitement. Cette opération est représentée en figure 1c.

Ensuite on recommence l'opération en balayant la surface SI à l'aide d'une figure géométrique (hexagone) de dimensions inférieures incorporant un autre nombre de points images. L'aire de la surface est mesurée. Cette opération est représentée en figure 1d. Puis on recommence cette opération plusieurs fois avec des hexagones de dimensions plus petites. On obtient à chaque fois, pour chaque balayage, une dimension de surface balayée différente.

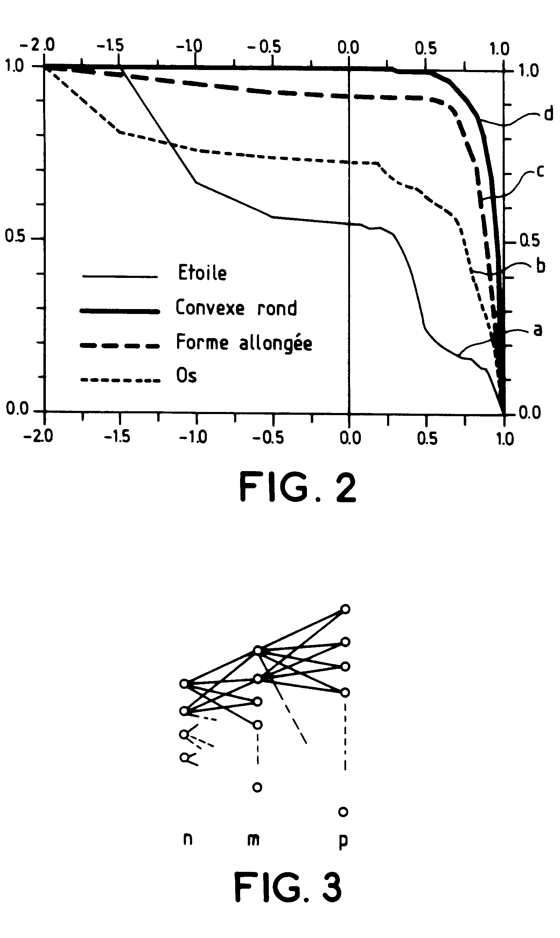

Les surfaces balayées obtenues pour les différentes dimensions d'hexagones permettent d'établir une courbe représentative de la répartition des dimensions de ces surfaces. Cette courbe est donc représentative de la répartition spectrale ou fonction spectrale de la forme d'image obtenue avec les différentes tailles d'hexagones. Pour une forme étoilée telle que celle de la figure 1a, on trouvera un exemple de fonction spectrale représentée par la courbe "a" de la figure 2.

Cette répartition spectrale est ensuite étudiée dans un système classifieur classique ou de type neuronale ayant fait l'objet d'une base d'apprentissage.

A titre d'exemple, un réseau neuronal utilisé est un réseau à trois couches de cellules de neurones telle que représenté en figure 3.

La première couche correspond au nombre de type d'échantillons ou, selon ce qui a été décrit précédemment, aux différentes mesures de dimensions de surfaces balayées et comprend p neurones.

La troisième couche comprend n neurones correspondant au nombre de formes possibles identifiables par le système.

La couche intermédiaire m a un nombre de neurone qui peut être typiquement de valeur $\sqrt{n.p.}$

A titre d'exemple, le réseau de neurones ayant fait l'objet d'un apprentissage d'une manière connue est capable de reconnaître une forme parmi n = 4 possibles.

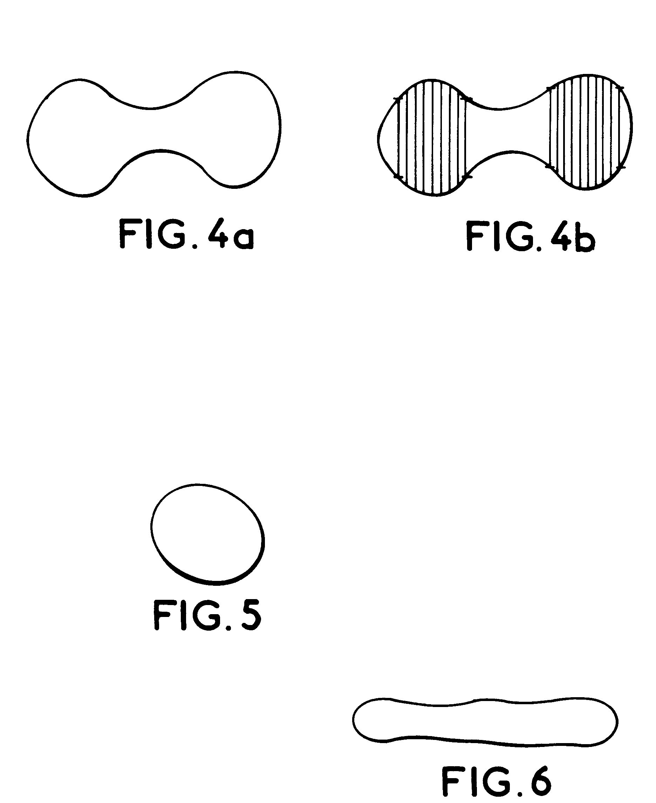

Les figures 4a, 5, 6 représentent trois autres formes détectables par le système :
– une forme d'os (figure 4a) ;
– une forme circulaire (figure 5) ;
– une forme allongée (figure 6).

Les fonctions spectrales de ces différentes formes sont représentées sur la figure 2. La courbe "b" représente la fonction spectrale de la forme d'os. La courbe "c" représente la fonction spectrale de la forme circulaire et la courbe "d" la fonction spectrale de la forme allongée.

Si le nombre d'échantillonnage est pris égale à 30 on a donc p = 30, on prendra avantageusement n = 10 dans le réseau de neurones.

Dans ce qui précède on considère que le balayage de la surface de la figure 1b à l'aide d'éléments géométriques se fait successivement à l'aide d'éléments de tailles différentes, ce qui se fait donc au cours d'opérations successives.

Cependant, on peut également réaliser ces opérations simultanément pour aboutir à la construction de la fonction spectrale de la forme d'image.

On peut également, au lieu de réaliser un balayage de la surface avec un élément de forme et de taille déterminées, placer dans la surface des éléments de tailles différentes de formes identiques ou non. Par exemple, on inscrit dans la surface un élément hexagonal de taille maximale, puis dans la surface restante on inscrit un ou plusieurs éléments de tailles plus petites et ainsi de suite.

Dans le mode de fonctionnement qui précède on a considéré un balayage de la surface d'image à l'aide d'éléments géométriques de même forme mais de différentes tailles. Cependant on peut également réaliser un balayage avec des éléments géométriques de formes différentes.

Selon une variante de réalisation représentée en figure 4b on utilise un élément linéaire que l'on déplace parallèlement à une direction de façon à balayer la surface, cet élément linéaire étant toujours inclus à l'intérieur du contour de la surface. Par exemple, pour la figure 4a, la surface balayée est telle que représentée en figure 4b. On réalise cette opération plusieurs fois avec des éléments de longueurs différentes. Ces différentes opérations donneront donc des surfaces balayées différentes en raison de la forme irrégulière de la surface de l'image.

Notamment, avec des éléments linéaires tels que représentés sur la figure 4b, la partie centrale de la surface et les extrémités de l'image ne peuvent pas contenir d'éléments linéaires et la surface balayée est réduite.

Après ces opérations, on réalise comme précédemment la fonction spectrale puis l'analyse dans un réseau neuronal ayant fait l'objet d'un apprentissage.

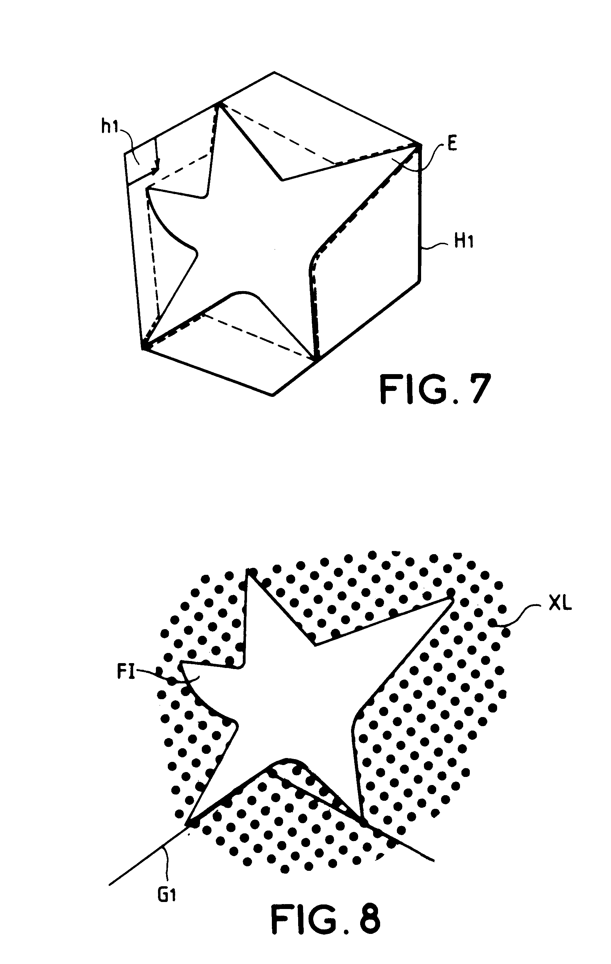

Pour compléter le procédé de l'invention, on calcule une enveloppe de l'image et plus précisément une enveloppe appelée enveloppe convexe "faible" de l'image comme cela va être décrit en se reportant à la figure 7.

On inscrit la forme E à analyser dans un élément géométrique H1 dont les côtés sont tangents à la forme E et sont parallèles aux directions principales soit de la trame de points (figure 1b) soit de l'élément géométrique. Ensuite, on balaye la surface de l'élément H1 non couverte par la forme E à l'aide d'éléments géométriques h1 en déplaçant chaque élément géométrique h1 parallèlement à des côtés choisis de l'élément H1. Cette dernière opération est répétée plusieurs fois à l'aide d'éléments géométriques h1 de dimensions différentes ce qui donne la surface balayée qui est délimitée par des pointillés sur la figure 7. On divise ensuite la surface obtenue précédemment par balayage de la surface image, par la surface de l'enveloppe convexe faible. On réalise ensuite, comme précédemment, la fonction spectrale puis l'analyse de la fonction spectrale dans un réseau neuronal.

Selon une autre variante de réalisation représentée en figure 8, on superpose comme précédemment la forme d'image FI à une trame d'éléments images XL mais on considère la partie de la trame extérieure au contour de la forme. Ensuite, avec des figures géométriques, telles que G1, on balaye le contour extérieur de la forme. On détermine la dimension de la surface non balayée. On recommence l'opération avec des figures géométriques (G1) de différentes dimensions. On obtient ainsi différentes surfaces non balayées et l'ensemble des dimensions de ces surfaces fournissent également la fonction spectrale de la forme d'image.

Dans ce qui précède après balayage d'une surface à l'aide d'un élément géométrique, on a mesuré l'aire de cette surface. On peut également sans sortir du cadre de l'invention, mesurer le périmètre de cette surface ou mesurer d'autres caractéristiques tel que cela sera mentionné ci-après.

De plus, comme on l'a dit précédemment les opérations réalisées avec des éléments géométriques de tailles différentes peuvent être réalisées simultanément ou bien d'être faites successivement. Pour cela dans une telle réalisation la courbe calculée sous la forme binaire X est la fonction spectrale.

$$s_X(u) = \begin{cases} \dfrac{A(X_{uRH})}{A\left[\lim\limits_{\lambda \to -\infty} X^{-\lambda h}\right]} & u \geq 0 \\[20pt] \dfrac{A(X^{-uRH})}{A\left[\lim\limits_{\lambda \to -\infty} X^{-\lambda h}\right]} & u < 0 \end{cases}$$

où

H : est un hexagone de taille 1

u : est un facteur de variation de taille de l'hexagone

R : est la taille du plus grand hexagone inscrit dans la surface

$A(X_{uRH})$ est l'aire de la surface à mesurer

$A(\lim_{\lambda \to -\infty} X^{-\lambda H})$ est un facteur de normalisation qui permet de faire $S_X = 1$ lorsque u tend vers moins l'infini $\lim_{\lambda \to -\infty}$ : est l'enveloppe convexe de la forme obtenue par exemple en inscrivant la forme dans un hexagone (figure 7) et $A(\lim_{\lambda \to -\infty} X^{-\lambda H})$ correspond alors à la surface de cet hexagone.

Il a été ajouté à cette courbe $s_X$ un facteur d'allongement qui vaut : $A(X) / R^2$.

La fonction spectrale et le facteur d'allongement sont invariants par rotation, translation et changement d'échelle de la forme.

Selon une variante de réalisation du procédé de l'invention, l'analyse d'une image peut être faite en réalisant une transformation de l'image et en analysant l'image transformée. Par exemple, l'inverse d'une image est le résultat d'une image par la transformation mathématique appelée inversion.

Etant donné un point fixe O du plan et un nombre réel positif k, on appelle inversion de centre O et de rapport k, la transformation associant à tout point M distinct de O le point M' situé sur la droite (OM) et tel que la distance de O à M notée $\overline{OM}$ vérifie l'équation :

$$\overline{OM}.\overline{OM}' = k$$

L'inversion transforme une courbe en une courbe. Appellons δ E la frontière de l'image E et choisissons un point O à l'intérieur de δ E et une valeur de k positive, alors l'inversion de centre O et de rapport k transforme δ X en une courbe fermée Γ , l'inverse d'un point M appartenant à l'image E se trouve extérieur de la courbe Γ , de même l'inverse d'un point M appartenant à l'extérieur de l'image E se trouve à l'intérieur de la courbe Γ .

Grâce à cette transformation, on peut étudier, sans problème de place mémoire, la surface balayée par un élément géométrique de taille croissance (allant jusqu'à de très grande tailles) à l'extérieur de la forme image E.

La procédure à suivre est la suivante :

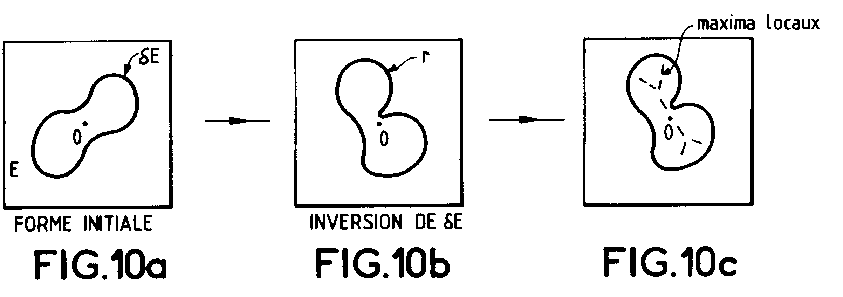

1. Comme cela est représenté en figures 10a et 10b. On transforme la frontière δ E par une inversion de centre O' (un point quelconque intérieur de E, comme par exemple le centre du plus grand disque inscrit dans E), et de rapport k (valeur positive déterminée à l'avance soit par l'utilisateur, soit de manière automatique comme étant par exemple proportionnel au rayon du disque maximal inscrit dans E, ou au diamètre de E... ). Pour des problèmes de discrétisation, on relie ensuite les points obtenus.

2. Construction de la fonction distance à la courbe restreinte à l'intérieur de Γ et au centre O, puis recherche des maxima locaux de cette fonction (figure 10c).

3. Construire d'une image de travail à teinte de gris de la manière suivante :
Construction les disques de centre M, maximum local de cette fonction distance et de rayon R vérifiant :

$$R = \frac{2(x^2 + y^2)h}{1 + \sqrt{1 + 4h^2(x^2 + y^2)}}$$

à l'altitude h où M a pour coordonnées (x, y) et h est la valeur de la distance de M à $\Gamma$ puis on en prend alors pour chaque point de l'image l'altitude maximum.

4. Calcul de l'histogramme cummulé Histo de cette image de travail, où chaque point M d'altitude h et de coordonnées (x, y) est pondéré par le coefficient :

$$\frac{k^2}{x^2 + y^2}$$

Ceci donne la valeur des surfaces des fermetures de la forme image initiale par des disques de taille croissante.

Comme décrit précédemment, on divise les surfaces obtenues par la surface de l'enveloppe convexe faible et on analyse la fonction spectrale obtenue dans un réseau neuronal.

On rappelle que dans l'exemple qui vient d'être décrit la transformation appliquée à l'image E est une inversion. Cependant, ce pourraît être toute autre transformation.

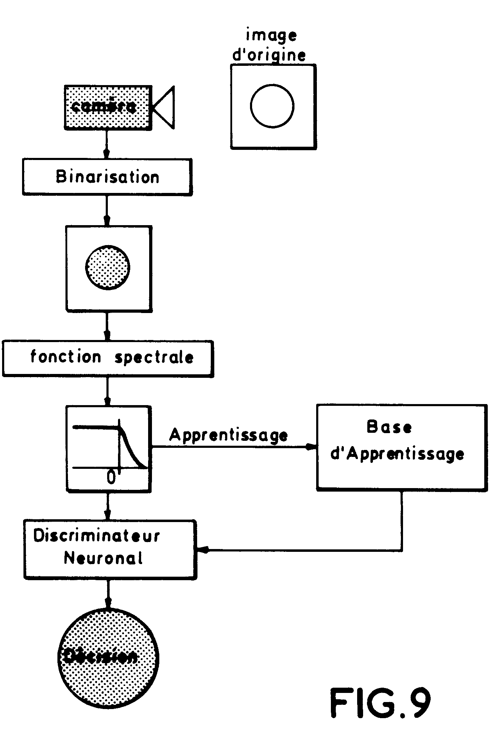

La figure 9 représente un diagramme synoptique du procédé de l'invention.

Selon ce diagramme, l'image d'origine est photographiée par une caméra, puis transformée en surface au cours d'une étape appelée binarisation.

Ensuite, des transformations morphologiques à l'aide d'éléments géométriques de tailles différentes sont réalisées. Ces transformations morphologiques permettent de réaliser la fonction spectrale de l'image.

Cette fonction spectrale est fournie à un réseau neuronal ou discriminateur neuronal qui a fait l'objet préalablement d'un apprentissage. Le réseau neuronal fournit enfin le résultat de l'analyse d'image au cours de la phase "décision".

A titre d'exemples de réalisation particuliers, il a été fait expérimentalement la reconnaissance de contours qui se répartissent en quatre classes :

. les formes convexes (figure 5)
. les étoiles (figure 1a)
. les "os" (figure 4a)
. les formes allongées (figures 6)

La figure 2 représente les fonctions spectrales qui s'en déduisent. Le réseau de neurones a 10 cellules cachées, c'est-à-dire p = 30, m = 10 et n = 4. La base d'apprentissage a comporté 50 exemples, ainsi que la base de test. Les résultats sont présentés par les matrices de confusions suivantes :

**APPRENTISSAGE**

|   | 0 | 1 | 2 | 3 |
|---|---|---|---|---|
| 0 | 100.0% | 0.0% | 0.0% | 0.0% |
| 1 | 0.0% | 100.0% | 0.0% | 0.0% |
| 2 | 0.7% | 0.0% | 99.3% | 0.0% |
| 0 | 0.0% | 0.0% | 0.0% | 100.0% |

Taux moyen de reconnaissance : 99.8 %

**GENERALISATION**

|   | 0 | 1 | 2 | 3 |
|---|---|---|---|---|
| 0 | 93.3% | 0.0% | 6.7% | 0.0% |
| 1 | 0.0% | 100.0% | 0.0% | 0.0% |
| 2 | 8.3% | 0.0% | 91.7% | 0.0% |
| 0 | 0.0% | 4.3% | 0.0% | 95.7% |

Taux moyen de reconnaissance : 95.3 %

Il est bien évident que la description qui précède n'a été faite qu'à titre d'exemple non limitatif et que d'autres variantes peuvent être envisagées. Notamment les formes détectables, les formes des éléments géométriques et les types d'opérations permettant d'obtenir les fonctions spectrales n'ont été fournies que pour illustrer la description. Les différents procédés peuvent également être combinés dans le même système.

De plus, dans ce qui précède, pour mesurer la taille de la surface balayée par un élément géométrique (figure 1d par exemple) ou de la surface non balayée (figure 8 par exemple), on a considéré qu'on mesure l'aire de cette surface. Mais on peut aussi mesurer la taille de ces surface en mesurant d'autres caractéristiques de ces surfaces telles que :
- le périmètre ;
- le diamètre (dimension extérieure la plus grande) ;
- le facteur d'allongement exprimé par exemple par le périmètre divisé par l'aire ;
- l'épaisseur (dimension la plus faible) ;
- le diamètre du cercle circonscrit à la surface ;
- le diamètre du cercle inscrit ;
- etc ...

**Revendications**

1. Procédé de reconnaissance d'une forme d'image caractérisé en ce qu'il comporte les différentes opérations suivantes :
   a) faire correspondre à la forme d'image (FI), une surface (SI) ayant un contour extérieur identique à celui de la forme ;
   b) superposer la surface à une trame de points images (PI) ;
   c) choisir des éléments géométriques d'un premier type d'une forme déterminée incorporant un certain nombre de points de la trame et ayant une première dimension déterminée ;
   d) construire l'enveloppe convexe faible de l'objet et mesurer sa dimension ;
   e) balayer la surface avec l'élément géométrique tout en restant à l'intérieur de la surface, mesurer la dimension de la surface balayée et diviser cette dispersion par la dimension de l'enveloppe convexe de l'objet ;
   f) réaliser les opérations (c), (d) précédentes avec des éléments géométriques d'un deuxième type, puis d'un troisième type et ainsi de suite ;
   g) faire correspondre, dans un classifieur (neuronal ou classique) à base d'apprentissage, à l'ensemble des mesures réalisées, une identification de forme d'image.

2. Procédé de reconnaissance d'une forme d'image caractérisé en ce qu'il comporte les différentes opérations suivantes :
   a) faire correspondre à la forme d'image (FI), une surface (SI) ayant un contour extérieur identique à celui de la forme ;
   b) superposer la surface à une trame de points images (XL) ;
   c) choisi des éléments géométriques d'un premier type d'une forme déterminée incorporant un certain nombre de points de la trame et ayant une première dimension déterminée ;
   d) construire l'enveloppe convexe faible de l'objet et mesurer sa dimension ;
   e) balayer la surface avec l'élément géométrique tout en restant à l'extérieur de la surface, mesurer la dimension de la surface non balayée et diviser cette dimension par la dimension de l'enveloppe convexe de l'objet ;

f) réaliser les opérations (c), (d) précédentes avec des éléments géométriques d'un deuxième type, puis d'un troisième type et ainsi de suite ;

g) faire correspondre dans un classifieur (neuronal ou classique) à base d'apprentissage, à l'ensemble des mesures réalisées, une identification de forme d'image.

3. Procédé de reconnaissance d'une forme d'image, caractérisé en ce qu'il comprend les différentes opérations suivantes :

a) faire correspondre à la forme d'image, une surface ayant un contour extérieur identique à celui de la forme ;

b) superposer la surface à une trame de points images ;

c) choisir des éléments géométriques d'un premier type d'une forme déterminée incorportant un certain nombre de points de la trame et ayant une dimension déterminée ;

d) transformer la surface image à l'aide d'une transformation mathématique ;

e) construire l'enveloppe convexe "faible" de l'objet et mesurer sa dimension ;

f) balayer la surface résultant avec des éléments géométriques du premier type tout en restant à l'intérieur de la surface, mesurer la dimension de la surface balayée et diviser cette mesure par la dimension de l'enveloppe convexe "faible" calculée précédemment ;

g) réaliser les opérations (c) et (f) précédentes avec des éléments géométriques d'un deuxième type, puis d'un troisième type et ainsi de suite ;

h) faire correspondre dans un classifieur (neuronal ou classique) à base d'apprentissage, à l'ensemble de mesures réalisées, une identification de forme d'image.

4. Procédé de reconnaissance d'une forme d'image, caractérisé en ce qu'il comporte les différentes opérations suivantes :

a) faire correspondre à la forme d'image, une surface ayant un contour extérieur identique à celui de la forme ;

b) superposer la surface à une trame de points images ;

c) choisir des éléments géométriques d'un premier type d'une forme déterminée incorportant un certain nombre de points de la rame et ayant une dimension déterminée ;

d) transformer la surface image à l'aide d'une transformation magnétique ;

e) construire l'enveloppe convexe "faible" de l'objet et mesurer sa dimension ;

f) balayer la surface résultant avec des éléments géométriques du premier type tout en restant à l'intérieur de la surface, mesurer la dimension de la surface balayée et diviser cette mesure par la dimension de l'enveloppe convexe "faible" calculée précédemment ;

g) réaliser les opérations (c) et (f) précédentes avec des éléments géométriques d'un deuxième type, puis d'un troisième type et ainsi de suite ;

h) faire correspondre dans un classifieur (neuronal ou classique) à base d'apprentissage, à l'ensemble de mesures réalisées, une identification de forme d'image.

5. Procédé selon l'une des revendications 3 ou 4, caractérisé en ce que la transformation mathématique est une inversion.

6. Procédé selon l'une des revendications 1, 2, 3 ou 4, caractérisé en ce que les éléments géométriques ont des formes similaires.

7. Procédé selon la revendication 6, caractérisé en ce que les éléments géométriques ont des formes polygonales.

8. Procédé selon la revendication 7, caractérisé en ce que les éléments géométriques ont des formes hexagonales.

9. Procédé selon la revendication 6, caractérisé en ce que les éléments géométriques ont des formes linéaires.

10. Procédé selon l'une des revendications 1, 2, 3, 5, caractérisé en ce que les éléments géométriques ont des formes qui évoluent en fonction de leurs positions.

**11.** Procédé selon la revendication 1, 2, 3 ou 4, caractérisé en ce que l'opération (c) est réalisée par érosion, par dilatation, par ouverture ou par fermeture, ou bien par combinaison de ces transformations.

**12.** Procédé selon la revendication 1, caractérisé en ce que l'élément géométrique du premier type à des dimensions maximales correspondant à l'élément géométrique de ce type et de surface maximale pouvant être inscrit dans la surface.

**13.** Procédé selon la revendication 12, caractérisé en ce que les éléments du deuxième type, troisième type, etc ... , ont des dimensions décroissant selon une loi déterminée jusqu'à atteindre une taille minimale déterminée.

**14.** Procédé selon la revendication 9, caractérisé en ce que les éléments géométriques d'un type ont une forme linéaire et sont parallèles entre eux.

**15.** Procédé de reconnaissance d'une forme d'image caractérisé en ce qu'il comporte les différentes opérations suivantes :
a) faire correspondre à la forme d'image, une surface d'image ayant un contour extérieur identique à celui de la forme ;
b) inscrire la surface d'image dans un élément géométrique d'un premier type d'une forme et de dimensions déterminées et dont on mesure la dimension ;
c) superposer l'élément géométrique du premier type à une trame de points images ;
d) choisir un élément géométrique d'un deuxième type incorporant un certain nombre de points de la trame et ayant des dimensions déterminées, et balayer avec cet élément géométrique la surface de l'élément géométrique du premier type non recouverte par la surface d'image, mesurer la dimension de la surface balayée et diviser cette mesure par la dimension de l'élément géométrique du premier type ;
e) faire correspondre, dans un classifieur (neuronal ou classique) une base d'apprentissage, une identification de forme d'image à l'ensemble des mesures réalisées.

**16.** Procédé selon la revendication 15, caractérisé en ce que :
– l'élément géométrique du premier type coïncide avec l'enveloppe convexe faible de la surface d'image ;
– les éléments géométriques du deuxième type sont des éléments linéaires ;
– les éléments linéaires sont parallèles entre eux et sont déplacés selon les directions parallèles à des côtés déterminés du contour extérieur de l'élément géométrique du premier type.

**17.** Procédé selon l'une quelconque des revendications 1, 2, 3, 4 ou 15, caractérisé en ce que la mesure de dimensions d'une surface balayée réside en la mesure de l'une ou de plusieurs caractéristiques de la surface suivantes :
– l'aire
– le périmètre
– le diamètre
– le facteur d'allongement
– l'épaisseur
– le diamètre du cercle inscrit
– le diamètre du cercle circonscrit.

FIG.1a

FIG.1b

FIG.1c

FIG.1d

FIG. 2

FIG. 3

FIG. 4a

FIG. 4b

FIG. 5

FIG. 6

FIG. 7

FIG. 8

image
d'origine

camera

Binarisation

fonction spectrale

Apprentissage

Base
d'Apprentissage

Discriminateur
Neuronal

FIG.9

EP 0 495 697 A1

δE

E

FORME INITIALE

**FIG.10a**

r

0

INVERSION DE δE

**FIG.10b**

maxima locaux

0

**FIG.10c**

EP 0 495 697 A1

**Office européen des brevets**

# RAPPORT DE RECHERCHE EUROPEENNE

Numero de la demande

EP 92 40 0063

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | PROCEEDINGS OF EUSIPCO-88, FOURTH EUROPEAN SIGNAL CONFERENCE: SIGNAL PROCESSING IV: THEORIES AND APPLICATIONS, GREBOBLE, FRANCE Septembre 1988, pages 251 - 254; M. BINAGHI ET AL.: 'Description and recognition of multidimensional signals using rotation and' * page 251, colonne de droite, ligne 11 - page 252, colonne de droite, ligne 18; figures 3,4 * | 1,6,11, 13,17 | G06K9/52 |
| | --- | | |
| A | IEEE TRANSACTIONS ON PATTERN ANALYSIS AND MACHINE INTELLGENCE, vol. 11, no. 7, Juillet 1989, NEW YORK US pages 694 - 700; MING-HUA CHEN ET AL.: 'A Multiscaling Approach Based on Morphological Filtering' * page 696, colonne de gauche, alinéa 1; figure 3 * | 1 | |
| | ----- | | |

**DOMAINES TECHNIQUES RECHERCHES (Int. Cl.5)**

G06K

Le présent rapport a été établi pour toutes les revendications

| Lieu de la recherche | Date d'achèvement de la recherche | Examinateur |
|---|---|---|
| LA HAYE | 15 AVRIL 1992 | Michiel Sonius |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

                    
& : membre de la même famille, document correspondant

EPO FORM 1503 03.82 (P0402)

16